# EUROPÄISCHE PATENTANMELDUNG

(11) **EP 2 159 233 A1**
(43) Veröffentlichungstag der Anmeldung: **03.03.2010**
(21) Anmeldenummer: 09177763.1
(22) Anmeldetag: 19.05.2006
(51) Int. Cl.: C08F 8/00, C08L 53/00, C09D 153/00, C08L 23/00, C09D 11/00

(54) **Verfahren zum Einfärben von Polyolefine umfassenden Polymerzusammensetzungen.**

(30) Priorität: 30.05.2005 DE 102005025018; 16.11.2005 DE 102005055078; 29.03.2006 EP 06111891
(62) Teilanmeldung aus: 06763203.4
(71) Anmelder: BASF SE, 67056 Ludwigshafen (DE)
(72) Erfinder: Karl, Ulrich, 67269, Grünstadt (DE); Siemensmeyer, Karl, 67227, Frankenthal (DE); Sierakowski, Claudia, 64342, Seeheim-Jugenheim (DE); Mijolovic, Darijo, 68309, Mannheim (DE); Fischl, Karin, 67069, Ludwigshafen (DE); Faber, Michael, 67105, Schifferstadt (DE)

(57) **Zusammenfassung**

Verfahren zum Einfärben von Polymerzusammensetzungen, welche Polyolefine, amphiphile Blockcopolymere aus Polyisobutenblöcken und Polyoxyalkylenblöcken, sowie optional andere Polymere umfassen. Bevorzugt handelt es sich um Fasern, Garne, Gewebe, Vliese, Gestricke, Gewirke und/oder andere textile Materialien aus den besagten Polymerzusammensetzungen.

## Beschreibung

Die vorliegende Erfindung betrifft ein Verfahren zum Einfärben von Polymerzusammensetzungen, welche Polyolefine, amphiphile Blockcopolymere aus Polyisobutenblöcken und Polyoxyalkylenblöcken, sowie optional andere Polymere umfassen. Bevorzugt handelt es sich um Fasern, Garne, Gewebe, Vliese, Gestricke, Gewirke und/oder andere textile Materialien aus den besagten Polymerzusammensetzungen.

Polyolefine, insbesondere Polypropylen, zeichnen sich durch zahlreiche hervorragende Eigenschaften wie niedrige spezifische Dichte, hohe Reißfestigkeit, gute Beständigkeit gegenüber Chemikalien, geringe Benetzbarkeit durch polare Medien, niedriges Wasseraufnahmevermögen, gute Wiederverwertbarkeit sowie einen geringen Preis aus. Sie lassen sich hervorragend zu vielfältigen Formen wie Fasern, Folien und Formkörpern verarbeiten.

Aufgrund der geringen Benetzbarkeit durch polare Substanzen bzw. der geringen Aufnahmefähigkeit von polaren Substanzen sind die Polyolefine sowie daraus hergestellte Fasern, Folien und Formkörper aber nur schlecht oder u.U. überhaupt nicht aus wässrigen Bädern färbbar.

Es ist bislang üblich, Polyolefinfasern zur Erzielung tiefer Farbtöne in Masse zu färben, das heißt, das farbgebende Pigment bzw. den Farbstoff bereits bei der Faserherstellung im Extruder zuzugeben. Auf diese Weise werden zwar gleichzeitig dunkle und gebrauchsechte Färbungen erreicht, jedoch ergeben sich bei einem Farbwechsel große Abfallmengen bzw. hohe Vorlaufzeiten. Daher ist nur die Herstellung großer Chargen wirtschaftlich sinnvoll. Kleinere Chargen, z.B. für modisch bedingte Farbwünsche, können nicht wirtschaftlich oder in kurzen Zeitabschnitten gefertigt werden. Des Weiteren sind brillante Farbtöne schlecht erreichbar.

Die schlechte nachträgliche Anfärbbarkeit steht bislang einer breiteren Anwendung von Polyolefinen im Textilbereich entgegen. So werden Polypropylenfasern trotz ihrer an sich günstigen Eigenschaften als Bekleidungsfasern, insbesondere im Bereich von Sport- und Freizeitbekleidung, selten verwendet.

Es hat daher nicht an Versuchen gefehlt, die nachträgliche Anfärbbarkeit von Polyolefinen zu verbessern.

WO 93/06177 offenbart ein Verfahren zum Färben von Fasern, insbesondere Polyolefinfasern, bei dem man die Faser mit einer Zusammensetzung aus einem Dispersionsfarbstoff und einem Quellmittel behandelt und auf eine Temperatur knapp unterhalb des Schmelzpunktes der Faser erhitzt, so dass zumindest ein Teil des Dispersionsfarbstoffes in die Faser migiriert. Der verbleibende Rest der Farbstoffzusammensetzung wird danach wieder von der Oberfläche der Faser entfernt.

Melliand Textilberichte 77 (1996) 588 - 592 und 78 (1997) 604 - 605 offenbaren das Färben von Polypropylenfasern mit speziellen Dispersionsfarbstoffen, welche C₈- bis C₁₈-Alkylreste aufweisen, wobei bevorzugt zusätzlich Tenside zur Färbeflotte gegeben werden, um Färbungen hoher Egalität zu erhalten und zur Erhöhung der Fixiergrade. Problematisch dabei ist, dass der Textilveredler ein zusätzliches Farbstoffsortiment ausschließlich für die Polyolefin-Färbung zur Verfügung halten müsste, was hohe Kosten nach sich zieht.

US 6,679,754 offenbart die Verwendung von Polyetheresteramiden als Zusatz zu Polyolefinen, um deren Anfärbbarkeit zu verbessern.

WO 04/35635 offenbart die Verwendung von mit terminalen, polaren Gruppen modifiziertem Polyisobuten zur Verbesserung der Anfärbbarkeit von Polyolefinen. Als Farbstoffe werden beispielsweise anionische, kationische, Beizen-, Direkt- Dispersions-oder Küpenfarbstoffe erwähnt. In einem Beispiel wird ein Polyisobuten-Bernsteinsäureanhydrid (Mₙ 550 g/mol) mit einer terminalen Gruppe aus einem Polyglkolether (Mₙ 300 g/mol) als Hilfsmittel zur Anfärbung von Polypropylen mit einem kationischen Farbstoff verwendet. Die Färbungen sind jedoch nicht immer intensiv genug, insbesondere beim Färben mit Dispersionsfarbstoffen oder Metallkomplexfarbstoffen. Beim Färben mit partikulären Küpenfarbstoffen ist es schwierig, durchgefärbte und nicht nur oberflächlich angefärbte Fasern zu erhalten.

WO 04/72024 offenbart die Verwendung von Polyisobutenphosphonsäuren zur Verbesserung der Anfärbbarkeit von Polypropylen.

Die beiden Schriften offenbaren aber nicht die Verwendung von amphiphilen Blockcopolymere aus Polyisobutenblöcken sowie Polyoxyalkylenblöcken als Hilfsmittel zum Einfärben von Polyolefinen.

WO 95/10648, EP-A 1 138 810 und WO 02/92891 offenbaren die Verwendung von verschiedenen Diestern von Polyalkylenglykolen mit Fettsäuren mit bis zu 21 C-Atomen zur Hydrophilierung von Polypropylen. Bevorzugt werden Polyethylenglykole mit einem Molgewicht von 300 bis 600 g/mol eingesetzt. Das Einfärben der modifizierten Polypropylene wird nicht offenbart.

In unserer älteren Anmeldung DE-A 102004007501 werden wässrige Polymerdispersionen offenbart, welche durch Di-, Tri- oder Multiblockcopolymere aus Polyisobuteneinheiten sowie Polyoxyalkyleneinheiten stabilisiert sind. Die Verwendung dieser Polymere zur Verbesserung der Anfärbbarkeit von Polyolefinen wird nicht offenbart.

Aufgabe der Erfindung war es, ein verbessertes Verfahren zum nachträglichen Einfärben von Polyolefinen, insbesondere Polypropylen mit wässrigen Färbebädern bereitzustellen. Hierbei sollten insbesondere homogene, keine Streifigkeit aufweisende Färbungen erhalten werden.

Dementsprechend betrifft die Erfindung ein Verfahren zum Einfärben von Polymerzusammensetzungen, bei dem man eine ungefärbte Polymerzusammensetzung mit einer Formulierung, umfassend mindestens Wasser und einen Farbstoff behandelt, wobei die ungefärbte Polymerzusammensetzung 35 bis 99,95 mindestens eines Polypropylen Homo- oder Copolymers sowie mindestens ein Blockcopolymer, umfassend
- mindestens einen hydrophoben Block (A), welcher im Wesentlichen aus Isobuteneinheiten aufgebaut ist, und dessen mittlere molare Masse Mₙ 200 bis 10000 g/mol beträgt, und
- mindestens einen hydrophilen Block (B), welcher im Wesentlichen aus Oxyalkyleneinheiten aufgebaut ist, und dessen mittlere molare Masse Mₙ 1000 bis 20000 g/mol beträgt,

umfasst, und wobei die die Menge der Blockcopolymere 0,05 bis 10 Gew. % bezüglich der Gesamtmenge aller Komponenten der Zusammensetzung beträgt, und man die Polymerzusammensetzung während und/oder nach der Behandlung auf eine Temperatur größer als ihre Glasübergangstemperatur Tg aber kleiner als ihre Schmelztemperatur erwärmt.

Bevorzugt handelt es sich um Fasern, Garne, Gewebe, Vliese, Gestricke, Gewirke und/oder andere textile Materialien aus den besagten Polymerzusammensetzungen.

Mittels des erfindungsgemäßen Verfahrens werden gleichmäßiger eingefärbte Zusammensetzungen mit höheren Reibechtheiten und sehr guten Waschechtheiten erhalten. Brilliante Farbtöne lassen sich so auf einfachere Art und Weise erhalten.

Zu der Erfindung ist im Einzelnen das Folgende auszuführen.

Die im erfindungsgemäßen Verfahren eingesetzte Polymerzusammensetzung umfasst mindestens ein Polyolefin sowie mindestens ein Blockcopolymer aus mindestens einem hydrophoben Block (A) sowie mindestens einem hydrophilen Block (B).

Das Blockcopolymer dient als Hilfsmittel zur Verbesserung der Eigenschaften, beispielsweise der Anfärbbarkeit des Polyolefins. Sofern Mischungen verschiedener Polyolefine eingesetzt werden, wirkt es darüber hinaus als effizienter Verträglichkeitsvermittler. Die Blöcke (A) und (B) sind mittels geeigneter verknüpfender Gruppen miteinander verbunden. Sie können jeweils linear sein oder auch Verzweigungen aufweisen.

Derartige Blockcopolymere sind bekannt und ihre Herstellung kann ausgehend von dem Fachmann prinzipiell bekannten Ausgangsverbindungen und Methoden erfolgen.

Die hydrophoben Blöcke (A) sind im Wesentlichen aus Isobuteneinheiten aufgebaut. Sie sind durch Polymerisation von Isobuten erhältlich. Die Blöcke können aber noch in geringem Umfange andere Comonomere als Bausteine aufweisen. Derartige Bausteine können zur Feinsteuerung der Eigenschaften des Blocks eingesetzt werden. Zu nennen als Comonomere sind neben 1-Buten und cis- bzw. trans-2-Buten insbesondere Isoolefine mit 5 bis 10 C-Atomen wie 2-Methyl-1-buten, 2-Methyl-1-penten, 2-Methyl-1-hexen, 2-Ethyl-1-penten, 2-Ethyl-1-hexen und 2-Propyl-1-hepten oder Vinylaromaten wie Styrol und α-Methylstyrol, C₁-C₄-Alkylstyrole wie 2-, 3- und 4-Methylstyrol und 4-tert.-Butylstyrol. Der Anteil derartiger Comonomerer sollte aber nicht zu groß sein. Im Regelfalle sollte deren Menge 20 Gew. % bezogen auf die Menge aller Bausteine des Blocks nicht übersteigen. Die Blöcke können neben den Isobuteneinheiten bzw. Comonomeren auch noch die zum Start der Polymerisation verwendeten Initiator- bzw. Startermoleküle oder Fragmente davon umfassen. Die so hergestellten Polyisobutene können linear, verzweigt oder sternförmig sein. Sie können nur an einem Kettenende oder auch an zwei oder mehreren Kettenenden funktionelle Gruppen aufweisen.

Ausgangsmaterial für die hydrophoben Blöcke A sind funktionalisierte Polyisobutene. Funktionalisierte Polyisobutene können ausgehend reaktiven Polyisobutenen hergestellt werden, indem man diese in ein- oder mehrstufigen, dem Fachmann prinzipiell bekannten Reaktionen mit funktionellen Gruppen versieht. Unter reaktivem Polyisobuten versteht der Fachmann Polyisobuten, welches einen sehr hohen Anteil von terminalen α-Olefin-Endgruppen aufweist. Die Herstellung reaktiver Polyisobutene ist ebenfalls bekannt und beispielsweise detailliert in den bereits zitierten Schriften WO 04/9654, Seiten 4 bis 8, oder in WO 04/35635, Seiten 6 bis 10 beschrieben.

Bevorzugte Ausführungsformen der Funktionalisierung von reaktivem Polyisobuten umfassen:
i) Umsetzung mit aromatischen Hydroxyverbindungen in Gegenwart eines Alkylierungskatalysators unter Erhalt von mit Polyisobutenen alkylierten aromatischen Hydroxyverbindungen,
ii) Umsetzung des Polyisobuten-Blocks mit einer Peroxi-Verbindung unter Erhalt eines epoxidierten Polyisobutens,
iii) Umsetzung des Polyisobuten-Blocks mit einem Alken, das eine mit elektronenziehenden Gruppen substituierte Doppelbindung aufweist (Enophil), in einer En-Reaktion,
iv) Umsetzung des Polyisobuten-Blocks mit Kohlenmonoxid und Wasserstoff in Gegenwart eines Hydroformylierungskatalysators unter Erhalt eines hydroformylierten Polyisobutens,
v) Umsetzung des Polyisobuten-Blocks mit einem Phosphorhalogenid oder einem Phosphoroxychlorid unter Erhalt eines mit Phosphongruppen funktionalisiertem Polyisobutens,
vi) Umsetzung des Polyisobuten-Blocks mit einem Boran und anschließender oxidativer Spaltung unter Erhalt eines hydroxylierten Polyisobutens,
vii) Umsetzung des Polyisobuten-Blocks mit einer SO₃-Quelle, bevorzugt Acetylsulfat oder Oleum unter Erhalt eines Polyisobutens mit terminalen Sulfonsäuregruppen,
viii) Umsetzung des Polyisobuten-Blocks mit Stickoxiden und anschließende Hydrierung unter Erhalt eines Polyisobutens mit terminalen Aminogruppen.

Hinsichtlich aller Details zur Durchführung der genannten Reaktionen verweisen wir auf die Ausführungen in WO 04/35635, Seiten 11 bis 27.

Besonders bevorzugt ist die Ausführungsform iii). Ganz besonders bevorzugt wird als Enophil hierbei Maleinsäureanhydrid zur Umsetzung eingesetzt. Dabei resultieren mit Bernsteinsäureanhydridgruppen (Succinanhydridgruppen) funktionalisierte Polyisobutene (Polyisobutenylbernsteinsäureanhydrid, PIBSA).

Die molare Masse der hydrophoben Blöcke A wird vom Fachmann je nach der gewünschten Anwendung festgelegt. In der Regel weisen die hydrophoben Blöcke (A) jeweils eine mittlere molare Masse Mₙ von 200 bis 10000 g/mol auf. Bevorzugt beträgt Mₙ 300 bis 8000 g/mol, besonders bevorzugt 400 bis 6000 g/mol und ganz besonders bevorzugt 500 bis 5000 g/mol.

Die hydrophilen Blöcke (B) sind im Wesentlichen aus Oxyalkyleneinheiten aufgebaut. Bei Oxalkyleneinheiten handelt es sich in prinzipiell bekannter Art und Weise um Einheiten der allgemeinen Formel -R¹-O-. Hierbei steht R¹ für einen zweiwertigen aliphatischen Kohlenwasserstoffrest, der auch optional noch weitere Substituenten aufweisen kann. Bei zusätzlichen Substituenten am Rest R¹ kann es sich insbesondere um O-haltige Gruppen, beispielsweise >C=O-Gruppen oder OH-Gruppen handeln. Ein hydrophiler Block kann selbstverständlich auch mehrere verschiedene Oxyalkyleneinheiten umfassen.

Bei den Oxyalkyleneinheiten kann es sich insbesondere um -(CH₂)₂-O-, -(CH₂)₃-O-, -(CH₂)₄-O-, -CH₂-CH(R²)-O-, -CH₂-CHOR³-CH₂-O- handeln, wobei es sich bei R² um eine Alkylgruppe, insbesondere C₁-C₂₄-Alkyl oder um eine Arylgruppe, insbesondere Phenyl, und bei R³ um eine Gruppe ausgewählt aus der Gruppe von Wasserstoff, C₁-C₂₄-Alkyl, R¹-C(=O)-, R¹-NH-C(=O)- handelt.
Die hydrophilen Blöcke können auch noch weitere Struktureinheiten umfassen, wie beispielsweise Estergruppen, Carbonatgruppen oder Aminogruppen. Sie können weiterhin auch noch die zum Start der Polymerisation verwendeten Initiator- bzw. Startermoleküle oder Fragmente davon umfassen. Beispiele umfassen terminale Gruppen R²-O-, wobei R² die oben definierte Bedeutung hat.

Im Regelfalle umfassen die hydrophilen Blöcke als Hauptkomponenten Ethylenoxideinheiten -(CH₂)₂-O- und/oder Propylenoxideinheiten -CH₂-CH(CH₃)-O, während höhere Alkylenoxideinheiten, d.h. solche mit mehr als 3 C-Atomen nur in geringen Mengen zur Feineinstellung der Eigenschaften vorhanden sind. Bei den Blöcken kann es sich um statistische Copolymere, Gradienten-Copolymere, alternierende oder Blockcopolymere aus Ethylenoxid- und Propylenoxideinheiten handeln. Die Menge an höheren Alkylenoxideinheiten sollte 10 Gew. %, bevorzugt 5 Gew. % nicht überschreiten. Bevorzugt handelt es sich um Blöcke, die mindestens 50 Gew. % Ethylenoxideinheiten, bevorzugt 75 Gew. % und besonders bevorzugt mindestens 90 Gew. % Ethylenoxideinheiten umfassen. Ganz besonders bevorzugt handelt es sich um reine Polyoxyethylenblöcke.

Die hydrophilen Blöcke B sind in prinzipiell bekannter Art und Weise erhältlich, beispielsweise durch Polymerisation von Alkylenoxiden und/oder cyclischer Ether mit mindestens 3 C-Atomen sowie optional weiterer Komponenten. Sie können weiterhin auch durch Polykondensation von Di- und oder Polyalkoholen, geeigneten Startern sowie optional weiteren monomeren Komponenten hergestellt werden.

Beispiele geeigneter Alkylenoxide als Monomere für die hydrophilen Blöcke B umfassen Ethylenoxid und Propylenoxid sowie weiterhin 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 2,3-Hexenoxid, 3,4-Hexenoxid, 2-Methyl-1,2-pentenoxid, 2-Ethyl-1,2-butenoxid, 3-Methyl-1,2-Pentenoxid, Decenoxid, 4-Methyl-1,2-pentenoxid, Styroloxid oder aus einer Mischung aus Oxiden technisch verfügbarer Raffinatströme gebildet sein. Beispiele für cyclische Ether umfassen Tetrahydrofuran. Selbstverständlich können auch Gemische verschiedener Alkylenoxide eingesetzt werden. Der Fachmann trifft je nach den gewünschten Eigenschaften des Blocks eine geeignete Auswahl unter den Monomeren bzw. weiteren Komponenten.

Die hydrophilen Blöcke B können auch verzweigt oder sternförmig sein. Derartige Blöcke sind erhältlich, indem man Startermoleküle mit mindestens 3 Armen einsetzt. Beispiele geeigneter Starter umfassen Glycerin, Trimethylolpropan, Pentaerythrit oder Ethylendiamin.

Die Synthese von Alkylenoxideinheiten ist dem Fachmann bekannt. Einzelheiten sind beispielsweise in "Polyoxyalkylenes" in Ullmann's Encyclopedia of Industrial Chemistry, 6^{th} Edition, Electronic Release ausführlich dargestellt.

Die molare Masse der hydrophilen Blöcke B beträgt mindestens 1000 g/mol und wird vom Fachmann je nach der gewünschten Anwendung festgelegt. Bei weniger als 1000 g/mol sind die Färbeergebnisse häufig unbefriedigend.

In der Regel weisen die hydrophilen Blöcke (B) jeweils eine mittlere molare Masse Mₙ von 1000 bis 20000 g/mol auf. Bevorzugt beträgt Mₙ 1250 bis 18000 g/mol, besonders bevorzugt 1500 bis 15000 g/mol und ganz besonders bevorzugt 2500 bis 8000 g/mol.

Die Synthese der erfindungsgemäß verwendeten Blockcopolymere kann bevorzugt vorgenommen werden, indem man zunächst die hydrophilen Blöcke B separat herstellt und in einer polymeranalogen Reaktion mit den funktionalisierten Polyisobutenen unter Bildung von Blockcopolymeren umgesetzt.

Die Bausteine für die hydrophilen und hydrophoben Blöcke weisen hierbei komplementäre funktionelle Gruppen auf, d.h. Gruppen, die miteinander unter Bildung von verknüpfenden Gruppen reagieren können.

Bei den funktionellen Gruppen der hydrophilen Blöcke handelt es sich naturgemäß bevorzugt um OH-Gruppen, es kann sich aber beispielsweise auch um primäre oder sekundäre Aminogruppen handeln. OH-Gruppen sind besonders geeignet als komplementäre Gruppen zur Umsetzung mit PIBSA.

In einer weiteren Ausführungsform der Erfindung kann die Synthese der Blöcke B auch vorgenommen werden, indem man polare funktionelle Gruppen aufweisende Polyisobutene (d.h. Blöcke A) direkt mit Alkylenoxiden unter Bildung von Blöcken B umsetzt.

Die Struktur der erfindungsgemäß verwendeten Blockcopolymere kann durch Auswahl von Art und Menge der Ausgangsmaterialien für die Blöcke A und B sowie der Reaktionsbedingungen, insbesondere der Reihenfolge der Zugabe beeinflusst werden.

Die Blöcke A und/oder B können terminal angeordnet sein, d.h. nur mit einem anderen Block verbunden sein, oder sie können aber mit zwei oder mehreren anderen Blöcken verbunden sein. Die Blöcke A und B können beispielsweise linear miteinander in alternierender Anordnung miteinander verknüpft sein. Prinzipiell kann eine beliebige Anzahl von Blöcken verwendet werden. Im Regelfall handelt sind aber nicht mehr als jeweils 8 Blöcke A bzw. B vorhanden. Hieraus resultiert im einfachsten Falle ein Zweiblockcopolymer der allgemeinen Formel AB. Weiterhin kann es sich um Dreiblockcopolymere der allgemeinen Formel ABA oder BAB handeln. Es können selbstverständlich auch mehrere Blöcke aufeinander folgen, beispielsweise ABAB, BABA, ABABA, BABAB oder ABABAB.

Weiterhin kann es sich um sternförmige und/oder verzweigte Blockcopolymere oder auch kammartige Blockcopolymere handeln, bei denen jeweils mehr als zwei Blöcke A an einen Block B oder mehr als zwei Blöcke B an einen Block A gebunden sind. Beispielsweise kann es sich um Blockcopolymere der allgemeinen Formel ABₘ oder BAₘ handeln, wobei m für eine natürliche Zahl ≥ 3 steht, bevorzugt 3 bis 6 und besonders bevorzugt 3 oder 4 steht. Selbstverständlich können in den Armen bzw. Verzeigungen auch mehrere Blöcke A und B aufeinander folgen, beispielsweise A(BA)ₘ oder B(AB)ₘ.

Die Synthesemöglichkeiten sind im Folgenden exemplarisch für OH-Gruppen und Bernsteinsäureanhydridgruppen (als S bezeichnet) dargestellt, ohne dass die Erfindung damit auf die Verwendung derartiger funktioneller Gruppen beschränkt sein soll.

| | |
|---|---|
| HO-[B]-OH | Hydrophile Blöcke, welche zwei OH-Gruppen aufweisen |
| [B]-OH | Hydrophile Blöcke, welche nur eine OH-Gruppe aufweisen. |
| [B]-(OH)ₓ | Hydrophile Blöcke mit x OH-Gruppen (x ≥ 3) |
| [A]-S | Polyisobuten mit einer terminalen Gruppe S |
| S-[A]-S | Polyisobuten mit zwei terminalen Gruppen S |
| [A]-S_{y} | Polyisobuten mit y Gruppen S (y ≥ 3) |

Die OH-Gruppen können in prinzipiell bekannter Art und Weise mit den Bernsteinsäureanhydridgruppen S unter Bildung von Estergruppen miteinander verknüpft werden. Die Reaktion kann beispielsweise unter Erwärmen in Substanz vorgenommen werden. Geeignet sind beispielsweise Reaktionstemperaturen von 80 bis 150°C.

Dreiblockcopolymere A-B-A ergeben sich beispielsweise auf einfache Art und Weise durch Umsetzung von einem Äquivalent HO-[B]-OH mit zwei Äquivalenten [A]-S. Dies ist im Folgenden beispielhaft mit vollständigen Formeln dargestellt. Als Beispiel dient die Umsetzung von PIBSA und einem Polyethylenglykol: 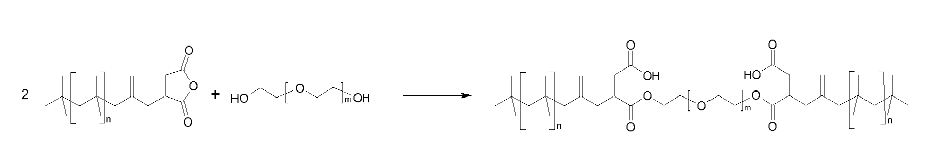 Hierbei stehen n und m unabhängig voneinander für natürlich Zahlen. Sie werden vom Fachmann so gewählt, dass sich die eingangs definierten molaren Massen für die hydrophoben bzw. die hydrophilen Blöcke ergeben.

Sternförmige oder verzweigte Blockcopolymere BAₓ können durch Umsetzung von [B]-(OH)ₓ mit x Äquivalenten [A]-S erhalten werden.

Für den Fachmann auf dem Gebiet der Polyisobutene ist klar, dass die erhaltenen Blockcopolymere je nach den Herstellbedingungen auch noch Reste von Ausgangsmaterialien aufweisen können. Außerdem kann es sich um Mischungen verschiedener Produkte handeln. Dreiblockcopolymere der Formel ABA können beispielsweise noch Zweiblockcopolymere AB sowie funktionalisiertes und unfunktionalisiertes Polyisobuten enthalten. Vorteilhaft können diese Produkte ohne weitere Reinigung für die Anwendung eingesetzt werden. Selbstverständlich können die Produkte aber auch noch gereinigt werden. Dem Fachmann sind Reinigungsmethoden bekannt.

Bevorzugte Blockcopolymere zur Ausführung dieser Erfindung sind Dreiblockcopolymere der allgemeinen Formel ABA, bzw. deren Mischung mit Zweiblockcopolymeren AB sowie ggf. Nebenprodukten.

Die geschilderten amphiphilen Blockcopolymere werden erfindungsgemäß als Hilfsmittel zur Verbesserung der Eigenschaften von Polyolefinen eingesetzt, beispielsweise zur Verbesserung der Einfärbung von Polyolefinen oder zur Verbesserung rheologischer Eigenschaften.

Als Polyolefine sind grundsätzlich alle bekannten Polyolefine geeignet. Beispielsweise kann es sich um Homopolymere oder Copolymere handeln, welche Ethylen, Propylen, 1-Buten, 2-Buten, Isobuten, 1-Penten, 1-Hexen, 1-Hepten, 1-Octen, Styrol oder α-Methylstyrol als Monomere umfassen. Bevorzugt handelt es sich um Polyolefine, welche C₂- bis C₄-Olefine als Hauptbestandteil umfassen, besonders bevorzugt um Polypropylen- oder Polyethylen- Homo- oder Copolymere. Bei Copolymeren kann es sich um statistische Copolymere oder um Blockcopolymere handeln. Geeignete Comonomere in Copolymeren sind bevorzugt - je nach Polyolefingrundkörpern - Ethylen oder andere α-Olefine, Diene wie Hexadien-1,4, Hexadien-1,5, Heptadien-1,6, 2-Methylpentadien-1,4, Octadien-1,7, 6-Methylheptadien-1,5, oder Polyene wie Octatrien und Dicyclopentadien. Der Anteil der Comonomere an dem Copolymer beträgt im Allgemeinen maximal 40 Gew. %, bevorzugt maximal 30 Gew. %, bezüglich der Summe aller Bestandteile eines Monomers, zum Beispiel 20 bis 30 Gew. % oder 2 bis 10 Gew. %, in Abhängigkeit von der Anwendung.

In einer bevorzugten Ausführungsform der Erfindung handelt es sich bei dem Polyolefin um Polyethylen, beispielsweise LDPE, HDPE oder LLDPE.

In einer besonders bevorzugten Ausführungsform handelt es sich bei dem Polyolefin um Polypropylen. Es kann sich hierbei um Polypropylen Homo- oder Copolymere handeln. Bei geeigneten Comonomeren kann es sich insbesondere um Ethylen sowie die oben erwähnten α-Olefine, Diene und/oder Polyene handeln. Die Auswahl von Polypropylen ist nicht beschränkt. Besonders vorteilhaft können zähflüssige Polypropylene mit einem hohen Schmelzflussindex verarbeitet werden. Beispielsweise kann es sich um Polypropylen mit einem Schmelzflussindex MFR (230°C, 2,16 kg) von weniger als 40 g / 10 min handeln.

Weiterhin kann es sich auch um Mischungen (Blends) verschiedener Polyolefine beispielsweise von Polypropylen und Polyethylen handeln.

Neben den Polyolefinen und den Blockcopolymeren können die erfindungsgemäßen Zusammensetzungen auch noch chemisch andersartige, von Polyolefinen verschiedene Polymere umfassen. Beispielsweise kann es sich bei weiteren Polymeren um Polyamide oder Polyester, insbesondere PET handeln. Mit derartigen Zusätzen lassen sich die Eigenschaften der polymeren Zusammensetzungen feinjustieren.

Die Menge optional vorhandener weiterer Polymere wird vom Fachmann je nach den gewünschten Eigenschaften der polymeren Zusammensetzung bestimmt. Sie sollte aber im Regelfalle 20 Gew. % bezüglich der Gesamtmenge aus Polyolefinen sowie der weiteren Polymere, d.h. der Menge aller Polymere mit Ausnahme der amphiphilen Blockcopolymere, nicht übersteigen. Falls vorhanden, haben sich Mengen von 0,1 bis 20 Gew. % bewährt, bevorzugt 1 bis 15 Gew. %, besonders bevorzugt 2 bis 10 Gew. % und ganz besonders bevorzugt 3 bis 7 Gew. %.

Bei den eingesetzten Polyestern kann es sich um übliches PET mit einem Schmelzpunkt von 255 bis 265°C handeln. Besonders vorteilhaft kann modifiziertes PET eingesetzt werden, welches zusätzliche Weichsegmente aufweist und dementsprechend einen niedrigeren Kristallisationsgrad oder Schmelzpunkt aufweist. Besonders vorteilhaft können zur Ausführung der Erfindung Polyester eingesetzt werden, welche einen Schmelzpunkt von 50 bis 250°C, bevorzugt 60 bis 200°C aufweisen. Die Verwendung derartiger Polyester-Zusätze führt zu besonders gut einfärbbaren Fasern mit besonders guter Lichtechtheit und einem sehr vorteilhaften Flottenauszug. Desweiteren lassen sich die Fasern durch Beimengungen solcher Polyester bereits bei Temperaturen von 100°C einfärben.

Derartige Polyester können erhalten werden, indem man zur Synthese der Polyester einen Teil der Terephthalsäureeinheiten im Polyester gegen aliphatische Dicarbonsäureeinheiten, insbesondere gegen Adipinsäureeinheiten ersetzt. Beispielsweise kann man ein Gemisch aus Terephtalsäure und Adipinsäure im Molverhältnis von 4:1 bis 1:20 einsetzen. Zusätzlich oder anstelle dieser Substitution können auch die Ethylengylkoleinheiten durch längerkettige Diole, insbesondere C₃- bis C₆-Alkandiole, wie beispielsweise 1,4-Butandiol oder 1,6-Hexandiol ersetzt werden.

Die erfindungsgemäß verwendeten amphiphilen Blockcopolymere erleichtern vorteilhaft nicht nur die Anfärbbarkeit, sondern wirken auch als effiziente Verträglichkeitsvermittler zum Verblenden verschiedener Polymere. Zu nennen sind hier insbesondere Blends aus verschiedenen Polyolefinen, wie beispielsweise Polypropylen und Polyethylen oder Polypropylen mit Polyester oder Polyamid.

Die eingesetzten Polymerzusammensetzungen können optional auch noch weitere typische Zusatzstoffe und Hilfsmittel umfassen. Beispiele umfassen Antistatika, Stabilisatoren oder Füllstoffe. Derartige Zusatzstoffe sind dem Fachmann bekannt. Einzelheiten hierzu sind beispielsweise in "Polyolefine" in Ullmann's Encyclopedia of Technical Chemistry, 6th Edition, 2000, Electronic Release dargestellt.

Füllstoffe zum Füllen von Polyolefinen sind dem Fachmann prinzipiell bekannt. Hierbei handelt es sich um feinteilige anorganische und/oder organische Feststoffe, mit denen sich Eigenschaften der Polyolefine, wie beispielsweise Härte, Dehnung, Dichte, Schlagzähigkeit, Gasdurchlässigkeit oder elektrische Leitfähigkeit beeinflussen lassen. Weiterhin können Füllstoffe auch als Flammschutzmittel eingesetzt werden. Es kann sich sowohl um mehr oder weniger sphärische Füllstoffe handeln als auch um Plättchen und/oder nadelförmige bzw. fiberartige Füllstoffe. Beispiele geeigneter Füllstoffe umfassen Carbonate, Hydroxyde, Oxide, Mischoxide, Silikate oder Sulfate.

Bei den Füllstoffen kann es sich beispielsweise um CaCO₃ handeln. Es kann sich hierbei CaCO₃ natürlichen Ursprunges, wie beispielsweise gemahlenen Kalkstein, gemahlenen Marmor oder gemahlene Kreide handeln. Es kann sich aber auch um gefälltes CaCO₃ industriellen Ursprunges handeln. Weitere Beispiele umfassen Dolomit CaMg(CO₃)₂, natürliches oder industrielles SiO₂ wie beispielsweise Quarz, pyrogenes SiO₂ oder Fällungskieselsäure, BaSO₄, CaSO₄, ZnO, TiO₂, MgO, Al₂O₃, Graphit, Russ, Schichtsilikate wie beispielsweise Kaolin, Montmorillonit, Glimmer, Talk oder Mica. Weiterhin können auch Fasern wie beispielsweise Glasfasern, Kohlenstofffasern oder Aramidfasern eingesetzt werden. Beispiele für Füllstoffe, welche als Flammschutzmitteln dienen können umfassen Al(OH)₃ oder Mg(OH)₂. Die Füllstoffe können selbstverständlich auch in prinzipiell bekannter Art und Weise modifiziert sein, beispielsweise mit geeigneten Dispergiermitteln und/oder Hydrophobierungmitteln belegt sein.

Die typische Größe von geeigneten Füllstoffen beträgt in der Regel 0,5 bis 5 µm, bevorzugt 1 bis 3 µm. Bei sphärischen oder annähernd sphärischen Partikeln bezieht sich diese Angabe auf den Durchmesser, ansonsten auf die Länge der Partikel.

Es können aber auch Nanopartikel mit einer Größe von 1 bis 500 nm eingesetzt werden. Geeignete Nanopartikel umfassen beispielsweise nanopartikuläres SiO₂ oder ZnO. Weiterhin können auch nanopartikuläre Schichtsilikate, insbesondere organisch modifizierte Schichtsilikate, wie beispielsweise Montmorillonit, Hektorit, Saponit, Beidellit oder Bentonit eingesetzt werden. Die Herstellung derartiger Nanopartikel ist in WO 2004/111122 beschrieben und entsprechende Produkte sind kommerziell erhältlich. Derartige Nanopartikel können eine Schichtdicke von nur ca. 1 nm aufweisen, während deren Länge und Breite im Bereich von 100 nm bis 500 nm liegen kann.

Bevorzugt zur Ausführung der Erfindung sind CaCO₃ Talk, Glasfasern sowie Schichtsilikate, insbesondere nanopartikuläre Schichtsilikate. Weiterhin können bevorzugt Flammschutzmittel eingesetzt werden, besonders bevorzugt Al(OH)₃ und/oder Mg(OH)₂.

Die Menge eventuell eingesetzter Füllstoffe wird vom Fachmann je nach dem verwendeten Füllstoff sowie je nach den gewünschten Eigenschaften des Polymers bestimmt. Sie beträgt in der Regel 1 bis 100 Gew. % bezogen auf die Summe aller Komponenten der Zusammensetzung.

Füllstoffe zu Verbesserung mechanischer Eigenschaften können vorteilhaft in einer Menge von 5 bis 50 Gew. %, bevorzugt 10 bis 40 Gew. % und besonders bevorzugt 15 bis 35 Gew. % eingesetzt werden.

Als Flammschutzmittel geeignete Füllstoffe wie beispielsweise Al(OH)₃ oder Mg(OH)₂ können vorteilhaft in Mengen von 25 bis 100 Gew. %, bevorzugt 35 bis 80 Gew. % und besonders bevorzugt 40 bis 60 Gew. % eingesetzt werden.

Aufgrund ihrer hohen spezifischen Oberfläche empfiehlt es sich, Nanopartikel in Mengen von nicht mehr als 10 Gew. % einzusetzen, beispielsweise 0,1 bis 10 Gew. %, bevorzugt 0,2 bis 5 Gew. %.

Die Vorteile der erfindungsgemäßen Verwendung der amphiphilen Blockpolymere kommen ganz besonders gut bei gefüllten Polyolefinen zum Tragen. Durch das Füllen der Polyolefine nimmt häufig deren Reissdehnung ab. Durch die Verwendung der amphiphilen Blockpolymere fällt die Abnahme der Reissdehnung beim Füllen deutlich geringer aus. Mit anderen Worten gesagt, weisen Polymerzusammensetzungen bei gleich hohem Füllgrad bessere mechanisch-technologische Eigenschaften auf, oder alternativ kann das Polymer mit einer größeren Menge eines preiswerten Füllstoffes gefüllt werden.

Die im erfindungsgemäßen Verfahren verwendeten Polymerzusammensetzungen können in beliebiger Form vorliegen, beispielsweise als beliebige Formkörper oder Folien. Bevorzugt liegt die Polymerzusammensetzung aber in Form von Fasern, Garnen, Geweben, Vliesen, Gewirken, Gestricken und/oder anderen textilen Materialien vor. Verfahren zur Herstellung von Fasern oder daraus hergestellten Garnen, Geweben, Vliesen und/oder anderen textilen Materialien aus Polymeren bzw. polymeren Zusammensetzungen sind dem Fachmann bekannt. Bei den Materialien kann es sich beispielsweise um Bekleidungstextilien, wie beispielsweise Sportbekleidung, Unterwäsche, O-berbekleidung, Jacken, Funktionswäsche o.ä., oder auch Heimtextilien, wie beispielsweise Gardinen, Tischdecken, Bettwäsche, Möbelstoffe, Teppiche oder dergleichen handeln. Weiterhin kann es sich auch um technische Textilien handeln, beispielsweise Teppiche oder Vliese für Automobilanwendungen.

Die Herstellung der im erfindungsgemäßen Verfahren verwendeten Polymerzusammensetzungen kann nach verschiedenen Techniken erfolgen. Beispielsweise können die Polyolefine bereits in Gegenwart der erfindungsgemäß verwendeten Blockcopolymere hergestellt werden. Weiterhin ist es möglich zunächst Polyolefin-Formkörper, insbesondere Fasern, Garne, Gewebe und/oder Vliese herzustellen und nachträglich oberflächlich mit den erfindungsgemäß verwendeten Blockcopolymeren zu behandeln, gegebenenfalls gefolgt von einem Temperschritt.

In der bevorzugten Ausführungsform der Erfindung werden die Blockcopolymere mit den Polyolefinen sowie optional weiteren Komponenten, insbesondere gegebenenfalls vorhandenen anderen Polymeren und / oder Füllstoffen, nach Erwärmen bis zur Schmelzflüssigkeit mittels geeigneter Apparaturen intensiv miteinander vermischt. Beispielsweise können Kneter, Einschneckenextruder, Doppelschneckextruder oder andere Dispergieraggregate eingesetzt werden. Der Austrag der schmelzflüssigen Polymerzusammensetzung aus den Mischaggregaten kann in prinzipiell bekannter Art und Weise über Düsen erfolgen. Hiermit können beispielsweise Stränge aufgeformt und zu Granulaten zerteilt werden. Die schmelzflüssige Masse kann aber auch direkt, beispielsweise mittels Spritzguss oder Blasformen zu gewünschten Formkörpern ausgeformt werden oder sie kann mittels geeigneter Düsen zu Fasern ausgeformt werden.

Das Blockcopolymer bzw. das Gemisch verschiedener Blockcopolymere kann den Polyolefinen inklusive eventuell vorhandener weiterer Komponenten bevorzugt in Substanz zugegeben werden, es kann aber auch in Lösung zugegeben werden.

Die Temperatur zum Vermischen wird vom Fachmann gewählt und richtet sich nach der Art der eingesetzten Polyolefine bzw. ggf. weiterer Polymerer. Die Polyolefine sollen einerseits in ausreichendem Maße erweichen, so dass Durchmischung möglich ist. Sie sollen andererseits nicht zu dünnflüssig werden, weil sonst kein ausreichender Scherenergieeintrag mehr erfolgen kann und unter Umständen auch thermischer Abbau zu befürchten ist. Im Regelfalle können Temperaturen von 120 bis 300°C angewandt werden, ohne dass die Erfindung darauf beschränkt sein soll. Besonders vorteilhaft erweist es sich hierbei, dass die erfindungsgemäß verwendeten Blockcopolymere eine hohe thermische Stabilität aufweisen.

Die im erfindungsgemäßen Verfahren verwendeten Polymerzusammensetzungen enthalten im Allgemeinen 35 bis 99,95 Gew. % der Polyolefine, bevorzugt 50 bis 99,9 Gew. % und besonders bevorzugt 60 bis 99,85 Gew. % der Polyolefine und ganz besonders bevorzugt 70 bis 99,8 Gew. %, jeweils bezogen auf die Summe aller Komponenten der Zusammensetzung.

Sofern keine Füllstoffe enthalten sind, können die Mengen an Polyolefinen auch höher sein. In diesem Fall enthalten die Zusammensetzungen im Allgemeinen 75 bis 99,95 Gew. % der Polyolefine, bevorzugt 85 bis 99,9 Gew. %, besonders bevorzugt 90 bis 99,85 Gew. % und ganz besonders bevorzugt 95 bis 99,8 Gew. %, jeweils bezogen auf die Summe aller Komponenten der Zusammensetzung.

Die Menge des Blockcopolymers wird vom Fachmannn je nach den gewünschten Eigenschaften der Zusammensetzung bestimmt. Sie beträgt im Regelfalle 0,05 bis 10 Gew. % bezüglich der Summe aller Komponenten der Zusammensetzung, bevorzugt 0,1 bis 6 Gew. %, besonders bevorzugt 0,3 bis 5 Gew. % und ganz besonders bevorzugt 0,5 bis 3,0 Gew. %.

In einer bevorzugten Ausführungsform des Verfahrens kann man die Blockcopolymere auch in einem zweistufigen Verfahren einarbeiten. Hierzu wird mindestens ein Blockcopolymer mit nur einem Teil der Polyolefine sowie ggf. anderen Polymeren unter Erwärmen miteinander vermischt. Hierbei können die bereits beschriebenen Techniken zum Vermischen eingesetzt werden. Ein derartiges Konzentrat kann 5 bis 50 Gew. %, bevorzugt 20 bis 40 Gew. % des Blockcopolymers enthalten. Das Konzentrat wird dann in einem zweiten Schritt mit dem Rest der Polyolefine unter Erwärmen vermischt und je nach dem Verwendungszweck ausgeformt. Beispielsweise können Fäden hergestellt werden, die weiter zu Garnen, Geweben, Vliesen oder anderen textilen Materialien verarbeitet werden können.

Die wie beschrieben hergestellten, noch ungefärbten Polymerzusammensetzungen, insbesondere in Form von Fasern, Garnen Geweben, Vliesen und/oder anderen textilen Materialien können auf einfache Art und Weise mittels des erfindungsgemäßen Verfahrens eingefärbt werden. Durch die erfindungsgemäße Verwendung der Blockcopolymere wird die Affinität der Polyolefine für Farbstoffe, insbesondere für Dispersionsfarbstoffe deutlich erhöht. Auf diese Art und Weise werden gefärbte Gewebe, Stoffe oder dergleichen erhalten. Insbesondere können auf diese Art und Weise gefärbte Bekleidungs- oder Heimtextilien erhalten werden. Hierbei kann das gesamte Gewebe eingefärbt werden. Es können aber zunächst auch nur die Fasern eingefärbt werden und anschließend die gefärbten Fasern zu textilen Materialien verarbeitet werden.

Bei dem erfindungsgemäßen Verfahren wird die ungefärbte Polymerzusammensetzung mit einer Formulierung, umfassend mindestens Wasser und einen Farbstoff behandelt. Eine wässrige Formulierung zum Einfärben von textilen Materialien wird vom Fachmann auch als "Flotte" bezeichnet.

Bevorzugt umfasst die Formulierung ausschließlich Wasser. Es können aber auch noch geringe Mengen von mit Wasser mischbaren, organischen Lösemitteln vorhanden sein. Beispiele derartiger organischer Lösemittel umfassen einwertige oder mehrwertige Alkohole, wie beispielsweise Methanol, Ethanol, n-Propanol, i-Propanol, Ethylenglykol, Propylenglykol oder Glycerin. Weiterhin kann es sich auch um Etheralkohole handeln. Beispiele umfassen Monoalkylether von (Poly)ethylen- oder (Poly)propylenglykolen wie Ethylenglykolmonobutylether. Die Menge derartiger, von Wasser verschiedener Lösemittel sollte aber in der Regel 20 Gew. %, bevorzugt 10 Gew. % und besonders bevorzugt 5 Gew. % bezüglich der Summe aller Lösemittel der Formulierung bzw. Flotte nicht überschreiten.

Als Farbstoffe in der Formulierung können prinzipiell alle bekannten Farbstoffe, wie beispielsweise kationische Farbstoffe, anionische Farbstoffe, Beizenfarbstoffe, Direktfarbstoffe, Dispersionsfarbstoffe, Entwicklungsfarbstoffe, Küpenfarbstoffe, Metallkomplexfarbstoffe, Reaktivfarbstoffe, Schwefelfarbstoffe, Säurefarbstoffe oder substantive Farbstoffen eingesetzt werden.

Bevorzugt wird zur Ausführung der Erfindung ein Dispersionsfarbstoff, ein Gemisch verschiedener Dispersionsfarbstoffe oder ein Säurefarbstoff bzw. ein Gemisch verschiedener Säurefarbstoffe eingesetzt.

Der Begriff "Dispersionsfarbstoff" ist dem Fachmann bekannt. Dispersionsfarbstoffe sind Farbstoffe mit einer niedrigen Wasserlöslichkeit, welche in disperser, kolloider Form zum Färben, insbesondere zum Färben von Fasern und textilen Materialien eingesetzt werden.

Es können prinzipiell beliebige Dispersionsfarbstoffe zur Ausführung der Erfindung verwendet werden. Diese können verschiedene Chromophore oder Gemische der Chromophore aufweisen. Insbesondere kann es sich um Azofarbstoffe oder Anthrachinonfarbstoffe handeln. Weiterhin kann es sich um Chinophthalon-, Naphthalimid-, Napthochinon- oder Nitrofarbstoffe handeln. Beispiele von Dispersionsfarbstoffen umfassen C.I. Disperse Yellow 3, C.I. Disperse Yellow 5, C.I. Disperse Yellow 64, C.I. Disperse Yellow 160, C.I. Disperse Yellow 211, C.I. Disperse Yellow 241, C.I. Disperse Orange 29, C.I. Disperse Orange 44, C.I. Disperse Orange 56, C.I. Disperse Red 60, C.I. Disperse Red 72, C.I. Disperse Red 82, C.I. Disperse Red 388, C.I. Disperse Blue 79, C.I. Disperse Blue 165, C.I. Disperse Blue 366, C.I. Disperse Blue 148, C.I. Disperse Violet 28 oder C.I. Disperse Green 9. Die Nomen-klatur von Farbstoffen ist dem Fachmann bekannt.
Die vollständigen chemischen Formeln können einschlägigen Fachbüchern und/oder Datenbanken (beispielsweise "Colour Index") entnommen werden. Nähere Einzelheiten zu Dispersionsfarbstoffen und weitere Beispiele sind auch beispielsweise in "Industrial Dyes", Edt. Klaus Hunger, Wiley-VCH, Weinheim 2003, Seiten 134 bis 158 ausführlich dargestellt.

Selbstverständlich können auch Mischungen verschiedener Dispersionsfarbstoffe eingesetzt werden. Auf diese Art und Weise können Mischfarben erhalten werden. Bevorzugt sind solche Dispersionsfarbstoffe, die gute Echtheiten aufweisen und bei denen eine Trichromie möglich ist.

Der Begriff "Säurefarbstoff" ist dem Fachmann bekannt. Diese weisen eine oder mehrere Säuregruppen, beispielsweise eine Sulfonsäuregruppe, oder ein Salz davon auf. Diese können verschiedene Chromophore oder Gemische der Chromophore aufweisen. Insbesondere kann es sich um Azofarbstoffe handeln. Beispiele von Säurefarbstoffen umfassen Monoazofarbstoffe wie C.I. Acid Yellow 17, C.I. Acid Blue 92, C.I. Acid Red 88, C.I. Acid Red 14 oder C.I. Acid Orange 67, Disazofarbstoffe wie C.I. Acid Yellow 42, C.I. Acid Blue 113 oder C.I. Acid Black 1, Trisazofarbstoffe wie C.I. Acid Black 210, C.I. Acid Black 234, Metallkomplexfarbstoffe wie C.I. Acid Yellow 99, C.I. Acid Yellow 151 oder C.I. Acid Blue 193 Beizfarbstoffe wie C.I. Mordant Blue 13 oder C.I. Mordant Red 19 oder Säurefarbstoffe mit verschiedenen anderen Strukturen wie C.I. Acid Orange 3, C.I. Acid Blue 25 oder C.I. Acid Brown 349. Nähere Einzelheiten zu Säurefarbstoffen und weitere Beispiele sind auch beispielsweise in "Industrial Dyes", Edt. Klaus Hunger, Wiley-VCH, Weinheim 2003, Seiten 276 bis 295 ausführlich dargestellt. Selbstverständlich können auch Mischungen verschiedener Säurefarbstoffe eingesetzt werden.

Die Menge der Farbstoffe in der Formulierung wird vom Fachmann je nach dem gewünschten Anwendungszweck festgelegt.

Die Formulierung kann über Lösemittel und Farbstoffe hinaus noch weitere Hilfsmittel umfassen. Beispiele umfassen typische Textilhilfsmittel wie Dispergier- und Egalisiermittel, Säuren, Basen, Puffersysteme, Tenside, Komplexbildner, Entschäumer oder Stabilisatoren gegen UV-Degradation. Bevorzugt kann ein UV-Absorber als Hilfsmittel eingesetzt werden.

Bevorzugt wird zum Färben eine neutrale oder saure Formulierung eingesetzt, beispielsweise mit einem pH-Wert von 3 bis 7, bevorzugt 4 bis 6.

Das Behandeln mit der Polymerzusammensetzung, insbesondere der Fasern, Garne Gewebe, Vliese und/oder anderen textilen Materialien mit der wässrigen Farbstoffformulierung kann mittels üblicher Färbeverfahren vorgenommen werden, beispielsweise durch Eintauchen in die Formulierung, das Aufsprühen der Formulierung oder das Auftragen der Formulierung mittels geeigneter Apparaturen. Es kann sich um kontinuierliche oder diskontinuierlich Verfahren handeln. Färbeapparaturen sind dem Fachmann bekannt. Die Färbung kann beispielsweise diskontinuierlich mit Haspelkufen, Garnfärbeapparaturen, Stückbaumfärbeapparaturen oder Jets erfolgen oder kontinuierlich durch Klotz-, Pflatsch-, Sprüh- oder Schaumauftragsverfahren mit geeigneten Trocken-und/oder Fixiereinrichtungen.

Das Verhältnis von Polymerzusammensetzung, insbesondere der Fasern, Garne Gewebe, Vliese und/oder anderen textilen Materialien zu der Farbstoffformulierung (auch als "Flottenverhältnis" bezeichnet) sowie insbesondere dem Farbstoff selbst wird vom Fachmann je nach dem gewünschten Anwendungszweck festgelegt. Bewährt hat sich im Regelfalle ein Verhältnis von Polymerzusammensetzung / Farbstoffformulierung von 1 : 5 bis 1 : 50, bevorzugt 1: 10 bis 1 : 50, sowie eine Farbstoffmenge in der Formulierung von ca. 0,5 bis 5 Gew. %, bevorzugt 1 bis 4 Gew. % bezogen auf die Polymerzusammensetzung, ohne dass die Erfindung auf diesen Bereich festgelegt sein soll.

Erfindungsgemäß wird die Polymerzusammensetzung während und/oder nach der Behandlung auf eine Temperatur größer als ihre Glasübergangstemperatur Tg aber kleiner als ihre Schmelztemperatur erwärmt. Dies kann bevorzugt so erfolgen, dass man die gesamte Formulierung auf die betreffende Temperatur erhitzt und die Polymerzusammensetzung in die Formulierung eintaucht.

Man kann aber auch die Polymerzusammensetzung mit der Formulierung bei einer Temperatur unterhalb von Tg behandeln, ggf. trocknen und anschließend die behandelte Polymerzusammensetzung auf eine Temperatur oberhalb von Tg erwärmen. Selbstverständlich sind auch Kombinationen beider Vorgehensweisen möglich.

Die Temperatur bei der Behandlung richtet sich naturgemäß nach der Art des jeweiligen Polyolefins und des verwendeten Farbstoffes. Die Glasübergangstemperaturen sowie Schmelztemperaturen von Polyolefinen sowie anderer Polymere sind dem Fachmann bekannt oder lassen sich auf bekannte Art und Weise leicht bestimmen. Im Regelfalle beträgt die Behandlungstemperatur mindestens 60°C, insbesondere 60 bis 140°C, bevorzugt 80 bis 140°C. Für Polypropylen Homo- und Copolymere haben sich besonders Temperaturen von 95 bis 140°C bewährt.

Der Farbstoff zieht im Zuge der Temperaturbehandlung unter Bildung einer gefärbten Polymerzusammensetzung in die Polymerzusammensetzung ein. In der gefärbten Polymerzusammensetzung ist der Farbstoff bevorzugt mehr oder weniger gleichmäßig verteilt, die Zusammensetzung kann aber auch Konzentrationsgradienten aufweisen. Bevorzugt handelt es sich bei dem Farbstoff um einen Dispersions- oder Säurefarbstoff, ganz besonders um einen Dispersionsfarbstoff.

Die Dauer der Behandlung wird vom Fachmann je nach der Art der Polymerzusammensetzung, der Formulierung sowie der Färbebedingungen bestimmt. Es ist auch möglich, die Temperatur in Abhängigkeit von der Behandlungsdauer zu verändern. Beispielsweise kann zunächst bei einer niedrigeren Temperatur begonnen werden, z.B. bei 70 bis 100°C und die Temperatur danach langsam auf 120 bis 140°C gesteigert werden. Bewährt hat sich eine Aufheizphase von 10 bis 90 min, bevorzugt 20 bis 60 min und eine nachfolgende Hochtemperaturphase von 10 bis 90 min, bevorzugt 20 bis 60 min. Alternativ ist eine Kurzzeitbehandlung, beispielsweise von ca. 0,5 bis 5 min mit Wasserdampf oder mit überhitztem Wasserdampf möglich.

An das Färben kann sich eine übliche Nachbehandlung, beispielsweise mit Waschmitteln oder oxidativ bzw. reduktiv wirkenden Nachreinigungsmitteln oder Echtheitsverbesserern anschließen. Derartige Nachbehandlungen sind dem Fachmann prinzipiell bekannt.

Mittels der erfindungsgemäßen Verfahren zum Färben sind eingefärbte Polymerzusammensetzungen erhältlich, die neben den bereits geschilderten Komponenten noch Farbstoffe, insbesondere Dispersionsfarbstoffe oder Säurefarbstoffe, besonders bevorzugt Dispersionsfarbstoffe enthalten. Bevorzugt beträgt die Menge der Farbstoffe 0,5 bis 4 Gew. % bezogen auf die Menge aller Komponenten der Zusammensetzung. Bei den gefärbten Polymerzusammensetzungen kann es sich beispielsweise um Bekleidungs- oder auch Heimtextilien handeln.

Die erfindungsgemäß eingefärbten Polymerzusammensetzungen zeichnen sich gegenüber Materialien aus dem Stand der Technik durch intensivere und gleichmäßigere Färbungen aus. Sie weisen weiterhin bessere Reibechtheiten und sehr gute Waschechtheiten auf.

Die folgenden Beispiele sollen die Erfindung näher erläutern.

### A) Herstellung der als Färbehilfsmittel eingesetzten Blockcopolymere

Blockcopolymer 1:
   Herstellung eines Blockcopolymers mit ABA Struktur aus PIBSA 550 und Polyethylenglykol 1500
   Umsetzung von PIBSA₅₅₀ (Molmasse Mₙ 550, Verseifungszahl, VZ = 162 mg/gKOH) mit Pluriol^{®} E1500 (Polyethylenoxid, Mₙ ≈ 1500)
   In einem 4 I Dreihalskolben mit Innenthermometer, Rückflusskühler und Stickstoffhahn wurden 693 g PIBSA (Mₙ = 684; Dispersitätsindex DP = 1,7) und 750 g Pluriol^{®} E1500 (Mₙ ≈ 1500, DP = 1,1) vorgelegt. Während des Aufheizens auf 80 °C wurde 3x evakuiert und mit N₂ belüftet. Das Reaktionsgemisch wurde auf 130 °C geheizt und 3 h bei dieser Temperatur gehalten. Danach ließ man das Produkt auf Raumtemperatur abkühlen. Folgende Spektren wurden aufgenommen:
   IR-Spektrum (KBr) in cm⁻¹ :
      OH-Valenzschwingung bei 3308; C-H Valenzschwingung bei 2953, 2893, 2746; C=O-Valenzschwingung bei 1735; C=C-Valenzschwingung bei 1639; weitere Schwingungen des PIB-Gerüsts: 1471, 1390, 1366, 1233; Etherschwingung des Pluriols bei 1111.
   1-H-NMR-Spektrum (CDCl₃, 500 MHz, TMS, Raumtemperatur) in ppm:
      4,9 - 4,7 (C=C von PIBSA); 4,3 - 4,1 (C(O)-O-CH₂-CH₂-); 3,8 - 3,5 (O-CH₂-CH₂-O, PEO-Kette); 3,4 (O-CH₃); 3,1 - 2,9; 2,8 - 2,4; 2,3 - 2,1; 2,1 - 0,8 (Methylen und Methin der PIB-Kette).
Blockcopolymer 2
   Herstellung eines Blockcopolymers mit ABA Struktur aus PIBSA 1000 und Polyethylenglykol 6000
   Umsetzung von PIBSA₁₀₀₀ (Verseifungszahl, VZ = 86 mg/gKOH) mit Pluriol^{®} E6000 (Polyethylenoxid, Mₙ ≈ 6000)
   In einem 4 I Dreihalskolben mit Innenthermometer, Rückflusskühler und Stickstoffhahn wurden 783 g PIBSA (Mₙ = 1305; DP = 1,5) und 1800 g Pluriol^{®} E6000 (Mₙ ≈ 6000, DP = 1,1) vorgelegt. Während des Aufheizens auf 80 °C wurde 3x evakuiert und mit N₂ belüftet. Die Mischung wurde anschließend auf 130 °C geheizt und 3 h bei dieser Temperatur gehalten. Danach ließ man das Produkt auf Raumtemperatur abkühlen und untersuchte es spektroskopisch.
   IR-Spektrum (KBr) in cm⁻¹ :
      OH-Valenzschwingung bei 3310; C-H Valenzschwingung bei 2956, 2890, 2745; C=O-Valenzschwingung bei 1732; C=C-Valenzschwingung bei 1640; weitere Schwingungen des PIB-Gerüsts: 1471, 1388, 1365, 1232; Etherschwingung des Pluriols bei 1109.
   1-H-NMR-Spektrum (CDCl₃, 500 MHz, TMS, Raumtemperatur) in ppm:
      Vergleichbar mit dem Beispiel 1, unterschiedliche Intensitäten:4,9 - 4,7 (C=C von PIBSA); 4,3 - 4,1 (C(O)-O-CH₂-CH₂-); 3,8 - 3,5 (O-CH₂-CH₂-O, PEO-Kette); 3,4 (O-CH₃); 3,1 - 2,9; 2,8 - 2,4; 2,3 - 2,1; 2,1 - 0,8 (Methylen und Methin der PIB-Kette)

### Vergleichspolymer

Terminale, polare Gruppe aufweisendes Polyisobuten (gemäß WO 04/35635)

Umsetzung von PIBSA₁₀₀₀ (Verseifungszahl, VZ = 86 mg/gKOH) mit Tetraethylenpentamin

In einem 2 l Vierhalskolben werden 582 g PIBSA (85 % α-Olefinanteile, Mₙ = 1000; DP =1,70; bezogen auf das Polyisobuten) und 63,8 g Ethylhexanol unter Inertgasatmosphäre (N₂-Schutz) vorgelegt. Es wird auf 140 °C aufgeheizt, bevor 99,4 g Tetraethylpentamin zugetropft werden. Nach erfolgter Zugabe wird auf 160 °C geheizt und 3 h die Temperatur gehalten. Während der Reaktion destillieren teilweise flüchtige Bestandteile über. Zur Vollständigkeit wird gegen Ende der Reaktion der Druck für 30 min auf 500 mbar gesenkt. Danach kühlt man auf Raumtemperatur ab.

IR-Spektrum: NH-Schwingung bei 3295, 1652 cm⁻¹, C=O Valenzschwingung des Bernsteinsäureimidgerüstes bei 1769, 1698 cm⁻¹. Daneben finden sich Schwingungen des PIB-Gerüstes: 2953, 1465, 1396, 1365 und 1238 cm⁻¹.

### B) Färbeversuche

Herstellung der erfindungsgemäß verwendeten, ungefärbten Polymerzusammensetzungen:
Für die Versuche wurden die folgenden Polymere eingesetzt:
Polypropylen: Moplen HP 561 S (Fa. Basell). Moplen HP 561 S ist ein Homo-Polypropylen (Metallocen-Katalyse) mit sehr enger Verteilung des Molekulargewichtes. Es ist speziell geeignet zum Verspinnen kontinuierlicher Filamente und nonwovens.
Produktdaten des Homo-Polypropylens HP 561 S ohne weitere Zusätze:

| Eigenschaften | Methode | Einheit | Werte |
|---|---|---|---|
| Melt Flow Rate | ISO 1133 | g/10 min | 33 |
| Zugkraft | ISO 527-1, -2 | MPa | 35 |
| Dehnung | ISO 527-1, -2 | % | 9 |
| Dehnung bei Bruch | ISO 527-1, -2 | % | > 50 |
| Erweichungspunkt | ISO 306 | °C | 152 |
| Wärmeformbeständigkeit | ISO 75B-1, -2 | °C | 86 |
| Dichte | ISO 1183 | g/cm³ | 0,89-0,91 |

Es wurden in zwei verschiedenen Versuchen jeweils 5 Gew. % der oben erwähnten Blockcopolymere 1 und 2 zu dem Polypropylen-Granulat gegeben. Zu Vergleichszwecken wurde auch eine Probe mit dem Vergleichspolymer hergestellt.
Die Versuche wurden im Doppelschneckenextruder bei 180°C Gehäusetemperatur und 200 U/min durchgeführt. Die Düsenleistungen betragen 1x4 mm.
Der Durchsatz beträgt 5 kg/h, das Blockcopolymer bzw. das Vergleichspolymer wird bei 80°C aufgeschmolzen und mit einem Durchsatz von 250 g/h zugegeben. Die Dosierpumpe läuft mit 100-200 g/h.
Verspinnen:
Die Verstreckung beträgt 1:3 und der Titer 17 dtex. Das Verspinnen erfolgt bei einer Temperatur zwischen 200 °C und 230 °C.
Herstellung textiler Flächengebilde:
   Alle extrudierten und additivierten Polymerfasern wurden zu Geweben oder Strickstücken verarbeitet, die nach den unten angegebenen Methoden gefärbt wurden. Die Verwendung textiler Flächengebilde gewährleistet die Beurteilung der Egalität von Textilveredlungsprozessen und z.B. des Griffs.
   Mit den erhaltenen textilen Flächengebilden wurden Färbeversuche durchgeführt:
Färbungen mit Dispersionsfarbstoffen:
   Die Färbungen wurden durchgeführt, indem man die wie beschreiben hergestellten Strickstücke unter Zusatz der angegebenen Farbstoffe in den angegebenen Mengen in entsalztem Wasser bei pH-Wert 4,5 in einem AHIBA-Färbeapparat von anfänglich 90°C innerhalb von 40 Minuten bis 130°C mit einer Aufheizrate von 1°C/min erhitzte und weitere 60 Minuten bei 130°C beließ. Das Verhältnis von Polypropylen-haltiger Maschenware (trocken) in Kilogramm zum Volumen des Behandlungsbads in Liter, das so genannte Flottenverhältnis, betrug 1:50. Nach der Färbung wurde auf ca. 90°C abgekühlt, die Färbungen wurden entnommen, kalt gespült und bei 100°C getrocknet.
   Flottenverhältnis = 1:50 (Anmerkung: Die hier angegebenen, langen Flottenverhältnisse wurden wegen der kleinen Substratmengen angewendet und hängen nicht mit den erfindungsgemäß verwendeten Substanzen zusammen. Im technischen, d.h. Produktions-Maßstab kann bei den heute üblichen, sehr kurzen Flottenverhältnisse gearbeitet werden.)
Eingesetzte Dispersionsfarbstoffe:
   Es wurden jeweils Disperse Yellow 114, Disperse Red 60, Disperse Red 82 und Disperse Blue 56 verwendet. Es wurde eine Menge von 2 Gew. % bezogen auf die Masse des zu färbenden Textils eingesetzt.
Färbungen mit Säurefarbstoffen:
   Die Färbungen wurden wie bei den Dispersionsfarbstoffen beschrieben durchgeführt, jedoch wurde die maximale Temperatur des Färbebades auf 105°C gehalten.
Eingesetzte Säurefarbstoffe:
   Es wurden handelsübliche gelbe, rote und blaue Säurefarbstoffe in einer Menge von 2 Gew. % bezogen auf die Masse des zu färbenden Textils eingesetzt.
Bewertung der erhaltenen Textilien:
Die Beurteilung erfolgte anhand der folgenden Parameter:
- Erzielte Farbtiefe
- Egalität; besonderer Augenmerk galt hier der Frage, ob Streifigkeit beobachtet wurde oder nicht. Unter Streifigkeit versteht der Fachmann, dass einzelne Fasern bzw. Faserbündel eines Textils unterschiedlich intensiv eingefärbt sind, wodurch ein Streifenmuster hervorgerufen wird.
- Waschechtheit: Zur Bestimmung der Waschechtheit der erhaltenen Färbungen erfolgte eine Schnellwäsche mit 2g/l Feinwaschmittel, Flottenverhältnis 1:200, 5 Minuten bei 60 °C. Beurteilt wurde, ob sich die PP-Färbung während der Wäsche aufhellte, d.h. ob Farbstoff ausblutete, und ob ungefärbtes Begleitgewebe angeschmutzt wurde.
- Reibechtheit; sind die Farbstoffe nur oberflächlich auf der Faser angelagert, dann lassen sie sich auch leicht abreiben, sind die Farbstoffe in der Faser verteilt, dann lassen sie sich nicht abreiben.

Die mit den erfindungsgemäß als Hilfsmittel eingesetzten Blockcopolymeren 1 und 2 erhaltenen gefärbten Textilien wiesen sowohl bei Verwendung von Dispersionsfarbstoffen wie bei Verwendung von Säurefarbstoffen eine hohe Farbtiefe auf. Der Griff der Strickstücke war nicht verhärtet.

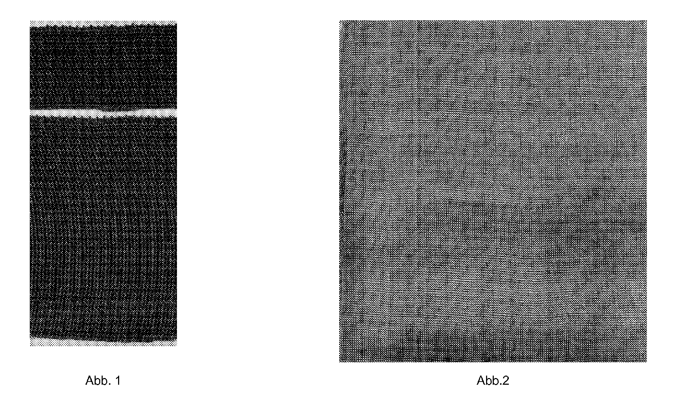

Die Textilien wiesen keine Streifigkeit auf (Siehe Abbildung 1).

Mit allen erfindungsgemäßen Substanzen wurden sehr gute Waschechtheiten erhalten.

Die Reibechtheit der Textilien war gut. Eine mikroskopische Aufnahme zeigt, dass sich der Farbstoff homogen in der Faser verteilt hat (Siehe Abbildung (3))

Zu Vergleichzwecken wurde ein Strickstück aus nicht-additiviertem Polypropylen unter gleichen Bedingungen gefärbt. Es wies aber lediglich eine leichte Anschmutzung durch die Farbstoffe auf.

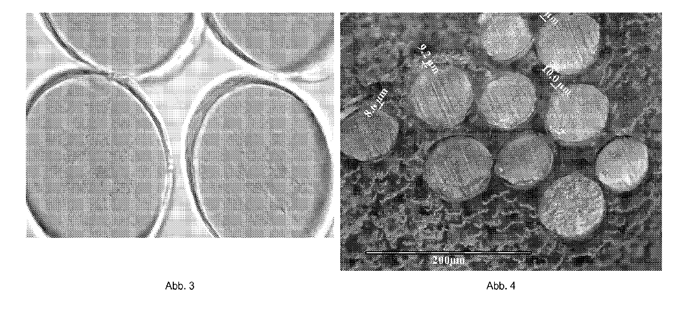

Zu Vergleichszwecken wurde weiterhin Polypropylen mit dem oben erwähnten Vergleichspolymer (PIB mit terminaler, polarerer Endgruppe aus Tetraethylenpentamin) in der gleichen Art und Weise additiviert. Es wurden Färbeversuche mit handelsüblichen blauen und roten Küpenfarbstoffen durchgeführt. Das Textil zeigte eine geringere Farbtiefe als bei der Verwendung der erfindungsgemäß verwendeten Blockcopolymere, vor allem aber eine sehr starke Streifigkeit (Abbildung 2). Die Reibechtheit war nur gering. Eine elektronenmikroskopische Aufnahme zeigte, dass die Fasern nur oberflächlich gefärbt waren (siehe Abbildung 4).

### Verzeichnis der Abbildungen

Abbildung 1 zeigt ein erfindungsgemäß mit einem blauen Dispersionsfarbstoff eingefärbtes Textil.
Abbildung 2 zeigt ein mit dem Vergleichspolymer additiviertes und einem Küpenfarbstoff eingefärbtes Textil.
Abbildung 3 zeigt einen Schnitt durch erfindungsgemäß mit einem roten Farbstoff eingefärbte Polypropylenfasern.
Abbildung 4 zeigt einen Schnitt durch mit dem Vergleichspolymer additivierte und einem roten Küpenfarbstoff eingefärbte Polypropylenfasern.

### C) Zusammensetzungen mit zusätzlichen Polymeren

### Herstellung eines Polyesters mit einem Schmelzpunkt von 94°C

In einer ersten Reaktionsstufe wurden in einer Stickstoffatmosphäre bei 230 bis 240°C 14 kg Adipinsäure, 9,344 kg 1,4-Butandiol und 0,1 g Zinndioctoat umgesetzt. Die Hauptmenge des entstehenden Wassers wurde abdestilliert und danach 0,02 g Tetrabutylorthotitanat zugegeben. Die Umsetzung wurde fortgesetzt, bis die Säurezahl unter den Wert 1 gesunken war. Danach wurde unter vermindertem Druck überschüssiges Butandiol abdestilliert bis eine OH-Zahl von 56 erreicht wurde.

In einer zweiten Reaktionsstufe wurden 720,8 g des erhaltenen Polyesters aus Adipinsäure und Butandiol wurden mit 454,4 g Terephthalsäuredimethylester, 680 g 1,4-Butandiol sowie 2 g Tetrabutylorthotitanat unter Stickstoff und langsamem Rühren auf 180°C erhitzt. Gebildetes Methanol wurde abdestilliert. Danach wurde innerhalb von 2 h auf 230°C erhitzt und 13,08 g Pyromellitsäuredianhydrid zugegeben und nach einer weiteren h 0,8 g einer wässrigen Lösung von phosphoriger Säure (50 Gew. %). Danach wurde bei vermindertem Druck überschüssiges Butandiol abdestilliert.

Es wurde ein Polyester mit einem Schmelzpunkt von 94°C, einer OH-Zahl von 16 mg KOH/g und einer Säurezahl kleiner 1 mg KOH/g erhalten.

Eine Zusammensetzung aus 95 Gew. % Polypropylen, 3,75 Gew. % des beschriebenen Polyesters sowie 1,25 Gew. % des Blockcopolymers 2 wurde wie oben durch Schmelzextrusion hergestellt, bei 230°C zu einer Faser versponnen und aus den Fasern wie oben beschrieben Textilien hergestellt. Dabei wurden DTY-Titer zwischen 35 dtex/32 filamente und 260 dtex/12 filamente ersponnen.Das Additiv wurde aus einem Konzentrat mit einer Zugabemenge von 10% zudosiert.

Mit den Textilien wurden Einfärbeversuche durchgeführt. Die Einfärbeversuche wurden wie oben beschrieben durchgeführt.

Der Zusatz der geringen Mengen von Polyestern mit niedrigem Schmelzpunkt ergibt eine Reihe von zusätzlichen Vorteilen im Vergleich zu erfindungsgemäßen Zusammensetzungen ohne den Zusatz:
- Färbetemperaturen von 100°C sind schon ausreichend. Dies ist wichtig bei der Teppichfärbung.
- Der Flottenauszug ist besser, d.h. die Faser nimmt mehr Farbstoff auf. Dementsprechend ist der Färbeprozess billiger und das Abwasser wird weniger mit Farbstoff belastet.
- Es lassen sich feinere Titer erspinnen, beispielsweise Mikrofasern mit 1 dtex/filament.

## Patentansprüche

1. Verfahren zum Einfärben von Polymerzusammensetzungen, bei dem man eine ungefärbte Polymerzusammensetzung mit einer Formulierung, umfassend mindestens Wasser und einen Farbstoff behandelt, **dadurch gekennzeichnet, dass** die ungefärbte Polymerzusammensetzung 35 bis 99,95 mindestens eines Polypropylen Homo- oder Copolymers sowie mindestens ein Blockcopolymer, umfassend
• mindestens einen hydrophoben Block (A), welcher im Wesentlichen aus Isobuteneinheiten aufgebaut ist, und dessen mittlere molare Masse Mₙ 200 bis 10000 g/mol beträgt, und
• mindestens einen hydrophilen Block (B), welcher im Wesentlichen aus Oxyalkyleneinheiten aufgebaut ist, und dessen mittlere molare Masse Mₙ 1000 bis 20000 g/mol beträgt,
umfasst, wobei die die Menge der Blockcopolymere 0,05 bis 10 Gew. % bezüglich der Gesamtmenge aller Komponenten der Zusammensetzung beträgt, und man die Polymerzusammensetzung während und/oder nach der Behandlung auf eine Temperatur größer als ihre Glasübergangstemperatur Tg aber kleiner als ihre Schmelztemperatur erwärmt.

2. Verfahren gemäß Anspruch 1, **dadurch gekennzeichnet, dass** das Polypropylen einen Schmelzflussindex MFR (230°C, 2,16 kg) von weniger als 40 g / 10 min aufweist.

3. Verfahren gemäß Anspruch 1 oder 2, **dadurch gekennzeichnet, dass** die Zusammensetzung weitere, von den Polyolefinen und den Blockcopolymeren verschiedene Polymere umfasst.

4. Verfahren gemäß Anspruch 3, **dadurch gekennzeichnet, dass** es sich bei weiteren Polymeren um Polyester und/oder Polyamide handelt.

5. Verfahren gemäß Anspruch 3 oder 4, **dadurch gekennzeichnet dass** die Menge der weiteren Polymere 0,1 bis 20 Gew. % bezüglich der Gesamtmenge aus Polyolefinen und weiteren Polymeren beträgt.

6. Verfahren gemäß einem der Ansprüche 1 bis 5, **dadurch gekennzeichnet, dass** der hydrophile Block (A) mindestens 50 Gew. % Ethylenoxideinheiten umfasst.

7. Verfahren gemäß einem der Ansprüche 1 bis 6, **dadurch gekennzeichnet, dass** es sich bei dem Blockcopolymer um mindestens ein Dreiblockcopolymer der allgemeinen Formel A-B-A handelt.

8. Verfahren gemäß einem der Ansprüche 1 bis 6, **dadurch gekennzeichnet, dass** es sich bei den Blockcopolymeren um Mischungen mindestens aus Dreiblock-und Zweiblockcopolymeren der allgemeinen Formel A-B-A bzw. A-B handelt.

9. Verfahren gemäß einem der Ansprüche 1 bis 8, **dadurch gekennzeichnet, dass** die Menge der Blockcopolymere 0,1 bis 6 Gew. % beträgt.

10. Verfahren gemäß einem der Ansprüche 1 bis 9, **dadurch gekennzeichnet, dass** es sich bei dem Farbstoff um einen Dispersionsfarbstoff handelt.

11. Verfahren gemäß einem der Ansprüche 1 bis 10, **dadurch gekennzeichnet, dass** die Polymerzusammensetzung weiterhin mindestens einen Füllstoff enthält.

12. Verfahren gemäß Anspruch 11, **dadurch gekennzeichnet, dass** es sich bei dem Füllstoff um mindestens einen, ausgewählt aus der Gruppe von CaCO₃, Al(OH)₃, Mg(OH)₂, Talk, Glasfasern oder Schichtsilikaten handelt.

13. Verfahren gemäß einem der Ansprüche 1 bis 12, **dadurch gekennzeichnet, dass** man die Polymerzusammensetzung in Form von Fasern, Garnen, Geweben, Vliesen, Gestricken, Gewirken und/oder anderen textilen Materialien einsetzt.
